# EUROPEAN PATENT SPECIFICATION

(11) **EP 0 588 593 B1**
(45) Date of publication and mention of the grant of the patent: **12.11.1997**
(21) Application number: 93307224.1
(22) Date of filing: 14.09.1993
(51) Int. Cl.: F02D 41/40, F02B 19/00, F02B 19/02

(54) **Engine with pre-chamber**
Brennkraftmaschine mit Vorkammer
Moteur à combustion avec préchambre

(30) Priority: 14.09.1992 JP 271072/92; 11.11.1992 JP 326058/92; 19.11.1992 JP 332211/92
(43) Date of publication of application: 23.03.1994
(73) Proprietor: ISUZU CERAMICS RESEARCH INSTITUTE CO., LTD., Fujisawa-shi Kanagawa 252 (JP)
(72) Inventor: Kawamura, Hideo, Samukawa-machi, Koza-gun, Kanagawa (JP)
(74) Representative: Brunner, Michael John

(56) References cited:
- US-A- 4 300 497
- US-A- 4 372 264
- US-A- 4 846 125

## Description

This invention relates to a high compression ratio internal-combustion engine having a pre-chamber.

A higher compression ratio (ε) generally leads to a better performance of the engine. Therefore, a gasoline engine has a compression ratio of about 8-10.

The engine does not have a sufficient performance when this compression ratio is further improved, owing to generation of knock in the combustion chamber of the engine.

In a diesel engine, fuel is injected to the air compressed in the combustion room and burns. Therefore, the diesel engine increases the compression ratio to about 18-23 and improves the performance.

A gasoline engine mixes the fuel with air and makes a so-called pre-mixture beforehand outside the engine and introduces this into the cylinder. When the compression ratio of the gasoline engine is raised to more than 8-10 and the temperature of the compressed air in the combustion room is raised furthermore, the pre-mixture gas introduced into the combustion ignites before a spark is ignited and knock is generated. It is therefore difficult for the gasoline engine to improve the compression ratio more than an old value.

On the other hand, the fuels used in the engine are the fossil fuels such as gasoline, light oil and natural gas. When this fossil fuel is used for the fuel of the engine, a lot of materials which pollute the atmosphere such as nitrogen oxide and soot are included in exhaust gas.

An engine which uses methanol with little pollution as a fuel has been developed. The content of soot and the nitrogen oxide in exhaust gas decreases when methanol is used for the fuel of the engine. And, when the load of the engine is high, a lot of problems are not caused. However, when the engine load is low, the wall temperature of the heat of the methanol is large and the ignition temperature is high. Therefore, evaporation and activation of the methanol become difficult and does not burn smoothly in the combustion chamber of the engine.

In view of the aforesaid drawbacks of the conventional internal-combustion engines, it is an object of the invention to provide an engine with a pre-chamber, so that even if the compression ratio of the air of the engine is raised more than conventional, problems are not caused.

It is another object of the invention to provide an engine with a pre-chamber, so that even if the compression ratio of the air of the engine is raised more than conventional and methanol fuel is used, problems are not caused.

It is a further object of the invention to provide an engine with a pre-chamber, so that even if the compression ratio of the air of the engine is raised more than conventional and natural gas fuel is used, problems are not caused.

US-A-4300497 discloses an engine with a ceramic pre-chamber to improve fuel combustion, whereby a valve controlled passageway connects the pre-chamber to a main combustion chamber, according to the first part of claim 1.

According to the present invention, there is provided an engine, the engine comprising:
a main chamber and a pre-chamber;
a passage hole installed between the pre-chamber and the main chamber
a control valve for closing the passage hole;
a driver for the control valve;
an injection nozzle for injecting a fuel to the pre-chamber;
means for controlling the control valve to close during an exhaust step and an intake step and to open at the last stage of a compression step; and,
means for controlling the injection nozzle to inject a fuel to the pre-chamber when the control valve is closed; characterised in that:
the means for controlling the control valve controls the control valve opening based on signals from a load sensor; and
the driver is a solenoid.

In the gas engine with this pre-chamber, a control valve which is driven by a solenoid valve drive unit worked by electromagnetic force opens a sub-connection passage first. Next, an electromagnetic drive unit opens a main connection hole.

The solenoid valve drive unit is composed of return spring to which the control valve is returned by the second iron plate adsorbed by the core by the first iron plate adsorbed by the core by the small electromagnetic force installed in the valve stem of an electromagnetic coil and the control valve arranged in the core and large magnetic force and the demagnetization of electromagnetic force in the gas engine with this pre-chamber.

The first iron plate is adsorbed by the core and sub-connection passage is opened. The second iron plate is adsorbed the core and a connection hole is opened.

A sub-connection passage may incline from the valve seat toward the cylinder wall side in the gas engine with this pre-chamber. Therefore, the passage sectional area is small and a large connection passage formed at the centre of the cylinder.

The opening and shutting operation is done by the electromagnetic force of the solenoid valve drive unit in the gas engine with this pre-chamber as for the fuel supply speech. The valve timing and the amount of the valve lift are controlled by the instruction of the controller who responds in the state of the engine operation.

There is provided an engine with pre-chamber further comprising a spark plug in a pre-chamber.

The engine with the pre-chamber by this invention acts as described as follows.

That is, the engine with this pre-chamber has a sub-connection passage formed in the valve seat surrounding a main connection passage by which the pre-chamber formed to the main chamber and the cylinder head formed on the cylinder side is connected.

The control valve has a protrusion which closes a main connection passage and a valve face which fits to the valve seat and closes the sub-connection passage. Therefore, combustion gas blows from sub-connection passage, that is, sub-eject hole in the first step of the valve lift and this gas blows toward the direction of outer side of the piston, that is, outer side of the main chamber.

Next, combustion gas is spouted in from the main connection passage the second step of the valve lift. The air which remains on the piston is mixed when this gas collides on the piston and the mixed gaseous body diffuses in the direction of the circumference. Therefore, the combustion in the pre-chamber is rich mixture combustion, and, the combustion in main combustion chamber is thin combustion.

This combustion can control nitrogen oxide NOₓ included in the exhaust gas.

The sub-connection passage inclines from the valve seat toward the cylinder wall side. The sectional area is small for the sub-connection passage and the sectional area for the main report hole is larger. Therefore, fuel spouts from sub-connection hole a little in the first step of the open operation of the control valve. In the second step of the open operation of the control valve, a large amount of fuel spouts from the main report hole.

For instance, the gas fuel with 2-3kg/cm² pressure in the pre-chamber is supplied as for this invention. At this time, the control valve closes the main report hole and the sub-connection hole. Therefore, the pre-chamber is filled with the gas fuel. Moreover, the inhalation air is introduced into main combustion chamber at the inhalation step.

Next, shifts to the compression step, the piston rises, and the inhalation air of main combustion chamber is compressed. Therefore, air in main combustion chamber is compressed into the high pressure.

The piston is positioned the front of 20 - 30 degree from the top dead centre, the control valve is opened a little.

The opening operation of the first step of the control valve opens only sub-connection hole.

About 20% of the compressed air in main combustion chamber is supplied to the subsidiary chamber through sub-connection hole. The fuel in the pre-chamber ignites in the supply of the compressed air.

The combustion expansion occurs after the rich mixture is burnt in the pre-chamber and a combustion flame and unburnt mixture are spouted from the pre-chamber to main combustion chamber through sub-connection hole.

The piston is positioned the front of 10 - 20 degree from the top dead centre, the control valve drives opening the second step, that is, main connection hole opens, and a combustion flame of the subsidiary chamber and a unburnt mixture gush into the main combustion chamber at speed.

When the pressure of main combustion chamber rises to more than the pressure in the pre-chamber, the control valve is pushed up by the pressure. Therefore, the power required by which the control valve operates is not so large. The control valve is opened for a long time during the expansion step by the solenoid valve drive unit.

Opening the control valve is maintained until combustion in the subsidiary chamber ends and a combustion flame and a unburnt mixture are spouted from the pre-chamber to the main combustion chamber. When combustion ends, the control valve returns to its former position by the power of return spring.

The main connection hole is closed with the control valve first during this operation. The control valve closes by the close operation of the control valve and further descends and closes sub-connection hole. The control valve returns to the state to close the main connection hole and sub-connection hole.

In the accompanying drawings:
Fig. 1 is a fragmentary cross-sectional view of the first embodiment of this invention;
Fig. 2 is a fragmentary cross-sectional view of the second embodiment of this invention; and,
Fig. 3 - Fig. 6 are explanatory drawings showing the state of control valve motion in the second embodiment of this invention.

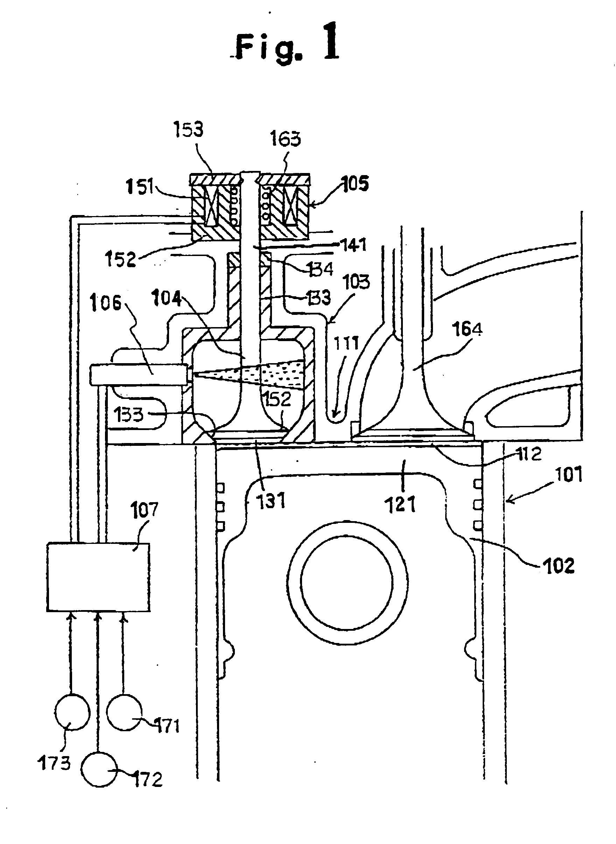

Fig. 1 is a fragmentary cross-sectional view of the first embodiment of the high compression ratio engine related to this invention.

In Fig. 1, 101 denotes a cylinder and the cylinder 101 has a piston 102 which can be moved up and down in this cylinder 101. There are installed an inlet valve or an exhaust valve 164 and a pre-chamber 103 which becomes precombustion chamber in the cylinder head 111. The material from which the piston head 121 is composed is ceramics which has high heat resistance and high strength. The pre-chamber 103 is constructed from a high strength, heat resistant, and heat insulating material, for example like silicon nitride.

Stem 141 of control valve 104 is slidably supported in an axis hole 133 which penetrates through a central upper part of the wall of the pre-chamber 103. Therefore, this control valve 104 can move in the direction of the axis of stem 141 in a vertical motion. A heat insulation material 134 is installed above axis hole 133 and heat in the pre-chamber is prevented from running away from stem 141 of control valve 104.

An electromagnetic device 105 is installed above stem 141 for the opening and shutting control valve 104. When the electric current is passed into coil 151 of this electromagnetic device 105, core 152 is pulled down to adsorption board 153 installed on stem 141 and moves control valve 104 downwards. Control valve 104 shuts connection hole 131 of pre-chamber 103. 163 denotes a return spring. 106 denotes an injection nozzle. The injection nozzle 106 is installed on the sidewall of pre-chamber 103. The fuel sent from a fuel tank is ejected from injection nozzle 106 to inside of pre-chamber 103.

The fuel injection instruction of fuel injection pump (not shown) is commanded by controller 107. The controller 107 is formed by a microcomputer. The detection signals from rotation sensor 171, load sensor 172, and crank axis position sensing device 173 of the engine are input to the controller 107. When these detection signals are input to controller 107, a fixed operation is done in the controller 107. The controller 107 commands the operation for injection pump or electromagnetic device 105 by a program stored in the controller 107.

Operation of the first embodiment of this invention will be described below.

During the induction step of the engine, connection hole 131 is closed by the control valve 104, and air flows into the cylinder from the inlet valve. Then, during the compression step of the engine, the air in the cylinder is compressed by the piston. In the last period of the compression step, the electromagnetic device 105 is operated and connection hole 131 is opened by movement of the valve 104. Before the connection hole 131 is opened, fuel is injected by the injection nozzle 106 to the pre-chamber 103. The fuel in the pre-chamber 103 is activated by exhaust gas remaining in the pre-chamber 103.

The connection hole 131 is opened by the control valve 104 at the last period of compression step, and compressed and hot air is put into the pre-chamber 103. The activated fuel is mixed by the air and burns in the hot air, but the fuel in the pre-chamber is so rich that the generation of NOₓ is controlled.

Afterwards, the non-burned fuel and flame generated in pre-chamber 3 is ejected to main chamber 112, and fuel and hot air in the main chamber 112 are reacted, and then combustion ends. Therefore, the supplied fuel smoothly burns in the cylinder even if the compression ratio of the engine is raised.

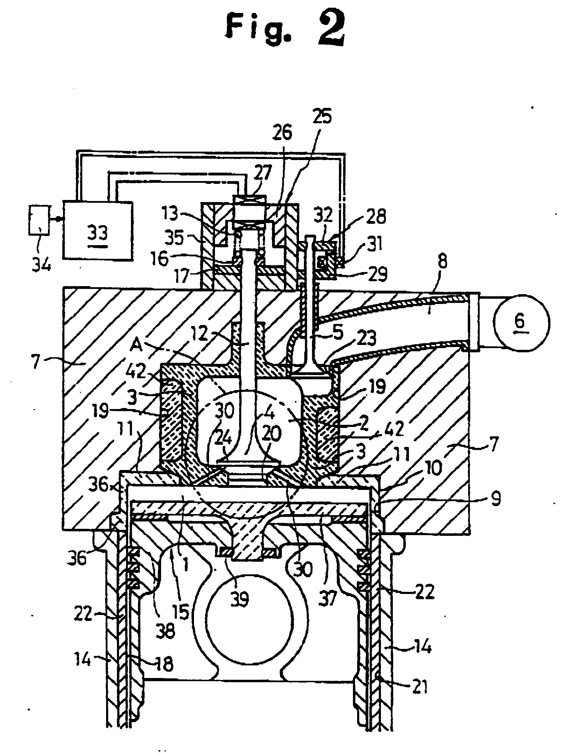

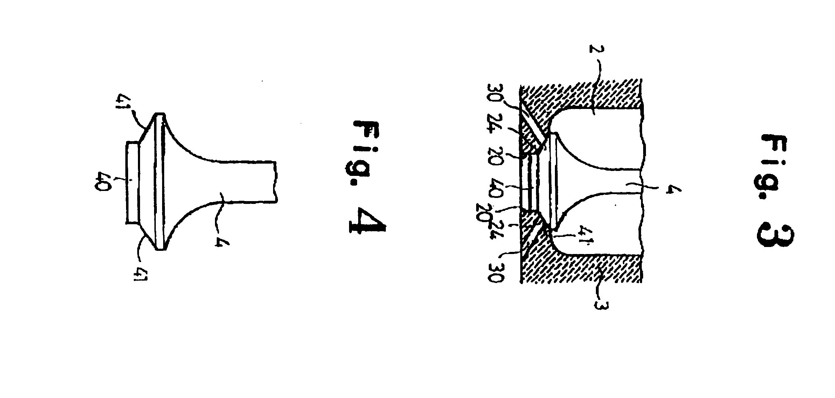

Fig. 2 is a fragmentary cross-sectional view of the second embodiment of this invention, and Fig. 3 - Fig. 6 are explanatory drawings showing the state of control valve motion in the second embodiment of this invention.

In Fig. 2, the engine has a subsidiary or pre-chamber 2 formed with side wall 3 of the heat insulating structure arranged in a space 19 formed in cylinder head 7. Cylinder head 7 is fixed to cylinder block 14. In addition, the engine has a cylinder 22 fixed in a space 21 in the cylinder block 14, piston 15, heat insulated main chamber 1 and connection hole 30 connected between main chamber 1 and pre-chamber 2.

Fuel inlet 23 is formed in a wall 3 of pre-chamber 2 and the gas fuel of a natural gas from fuel supply source 6 etc. is supplied to pre-chamber 2 by fuel inlet 23 through fuel passage 8. Fuel supply valve 5 to open and shut fuel inlet 23 is arranged in cylinder head 7. The gas engine with this pre-chamber has main connection passage 20 between main chamber 1 and pre-chamber 2 and sub-connection passage 30 surrounding this main connection passage 20. In addition, control valve 4, which opens and shuts main connection passage 20 and sub-connection passage 30, penetrates through the pre-chamber and is arranged in cylinder head 7.

As shown in Fig. 3, the control valve 4 has a protrusion 40, which engages with the main connection passage 20, and a valve face 41 on a conic side, which fits to the valve seat 24 to close the sub-connection passage 30. In addition, sub-connection passage 30 is inclined from valve seat 24 to the wall of the cylinder, and the main connection passage 20 is formed in the centre of cylinder. The sectional area of main connection passage 20 is larger than that of the sub-connection passage 30. Control valve 4 is controlled by controller 33. The control valve 4 has a solenoid valve drive unit 25 which is controlled by the instruction of controller 33. The control valve 4, which is driven by electromagnetic force, opens sub-connection passage 30 first, and then opens main connection passage 20 next. The control valve 4 is driven by double-lift motion movement. Solenoid valve drive unit 25 has a return spring 13 by which control valve 4 is returned on demagnetization of core 26; a coil 27 wound on the core 26 which is arranged in a case 35; and a first iron plate 16 and a second iron plate 17 fixed to valve stem 12.

The first iron plate 16 and the second iron plate 17 are rectangular plates. The first iron plate 16 is fixed on the top of valve stem 12 and the second iron plate 17 is fitted loosely to the valve stem 12. The plates are arranged in a mutually orthogonal state of intersection when seen in plan. Moreover, the first iron plate 16 and the second iron plate 17 are disposed in opposite position to each other. Therefore, when a small current flows through electromagnetic coil 27 by the instruction of controller 33, a small electromagnetic force arises in core 26 and the first iron plate 16 is attracted by core 26 and the control valve 4 rises slightly.

Valve face 41 on a conic side parts from valve seat 24, and sub-connection passage 30 opens, when control valve 4 rises slightly, thus producing a small opening. Next, when a large current flows through electromagnetic coil 27 by the instruction of controller 33, a large electromagnetic force is far from core 26 and the second iron plate 17 is attracted by core 26 and thus control valve 4 rises a large amount. Protrusion 40 comes out from main connection passage 20 if control valve 4 rises a large amount and main connection passage 20 opens.

The opening and shutting drive for fuel supply valve 5 is done by electromagnetic force with solenoid valve drive unit 28 depending on the state of the engine operation and for instance responds to the detection signal from load sensor 34 of the engine load; the valve timing and the amount of the valve lift are controlled by the instruction of controller 33. Solenoid valve drive unit 28 is composed of electromagnetic coil 31 arranged around the core 29, iron plate 32 attracted by core 29 and return spring (not show) which closes fuel inlet 23 by fuel supply valve 5.

In this gas engine, main chamber 1 is formed with head liner 10 which is engaged in hole 9 formed in cylinder head 7. Head liner 10, which is made from ceramics such as silicon nitride, is composed of lower side part 11 of the head and upper part 36 of the cylinder liner 18, and heat insulation layer is formed the surface of the head liner 10( not shown). A wall 3 of the pre-chamber 2 is arranged on the lower side part 11 of the head.

The wall of the pre-chamber 2 is made from ceramics such as the silicon nitride and heat insulation materials 42 such as ceramics fibres and titanic acid aluminum are formed on the face of the wall of pre-chamber 2. The inlet and outlet port can be formed in the cylinder head 7 or under the cylinder and inlet valve and exhaust valve are respectively arranged in the inlet and outlet port.

The fuel supply source 6 can be composed from a natural gas fuel tank or a natural gas accumulator. Only a necessary amount of natural gas is supplied from inlet 23 to pre-chamber 2 by opening fuel supply valve 5 through fuel passage 8. Moreover, connection passage valve 4 is manufactured with ceramics such as silicon nitride and silicon carbide having heat resistance and high temperature strength because of the high temperature in the area of main connection passage 20 and sub-connection passage 30 owing to the combustion gases.

Piston 15 is composed of piston skirt 38 fixed by metal flux with uniting ring 39 to piston head 37. Piston head 37 consists of ceramics such as silicon nitride in heat resistant cylinder liner 22 made with ceramics such as silicon nitride having excellent sliding characteristics.

This gas engine operates by repeating four cycles of the induction stroke, compression stroke, expansion stroke, and exhaust stroke. The opening and shutting drive is done by electromagnetic force by solenoid valve drive units 25 and 28 for control valve 4 and fuel supply valve 5.

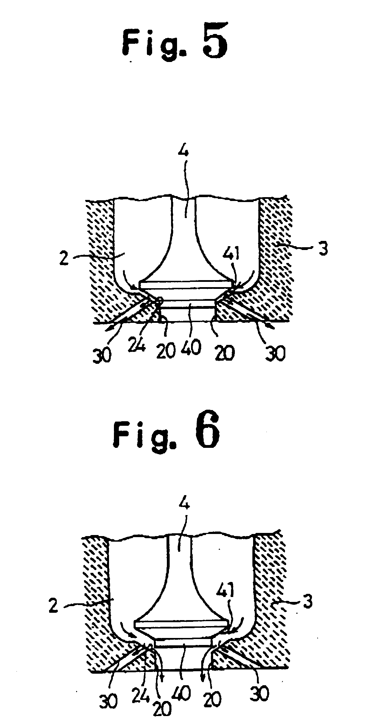

When control valve 4 opens a little, the combustion flame jets to main combustion chamber as shown in Fig. 5, and reaches the outer area on the side around cylinder 18 through sub-connection passage 30.

When a large current is supplied to solenoid valve drive unit 25 next as shown in Fig. 6, and control valve 4 opens more than a middle opening, the combustion flame in pre-chamber 2 is jetted and collides with the central top face of piston 15.

The activated fuel is mixed by the air and is burnt by the hot air, but the fuel in the pre-chamber is so rich that the generation of NOₓ is controlled. Afterwards, the non-burned fuel and flame generated in pre-chamber is ejected to the main chamber, and fuel and hot air in the main chamber are reacted, and then combustion ends. Therefore, the supplied fuel smoothly burns in the cylinder even if the compression ratio of the engine is raised. The exhaust of nitrogen oxide NOₓ and hydrocarbons HC can be suppressed.

As for control valve 4, fuel supply valve 5 opens at this time, the gas fuel of a natural gas of 2-3kg/cm² is introduced, the fuel supply valve 5 is closed and a fixed amount of fuel is introduced from fuel supply source 6 into pre-chamber 2 with main connection passage 20 and sub-connection passage 30 in this gas engine through fuel passage 8 at the induction stroke. Therefore, when the gas fuel from fuel supply source 6 is introduced into pre-chamber 2, the gas fuel is received, is heated, and is activated in pre-chamber 2 because it is a state that main connection passage 20 and sub-connection passage 30 are closed with control valve 4. The gas fuel remains in pre-chamber 2 with the exhaust gas after burning.

Next, at about the last stage of the compression stroke, main connection passage 20 and sub-connection passage 30 are closed with the control valve 4 and the compression ratio can be enlarged by compressing the induction air in main chamber 1 in this gas engine.

Next, control valve 4 is for instance pushed up by 20-30° at about the last stage of the compression stroke before the end of compression, control valve 4 opens sub-connection passage 30 first of all by driving solenoid valve drive unit 25, the air reaches a high temperature by high compression through sub-connection passage 30, and about 20% of the air is introduced from main chamber 1 to pre-chamber 2 for instance.

When the compressed air flows into pre-chamber 2, combustion begins and the combustion process causes mixing. The pressure in pre-chamber 2 rises, and becomes more than the pressure of main chamber 1 and the combustion flame will spout from pre-chamber 2 to main chamber 1 with the gas fuel and air through sub-connection passage 30 and main connection passage 20.

The combustion gas spouts from sub-connection passage 30 directly to the outside of piston 15 in the first step operation of control valve 4 and the main combustion gas spouts from main connection hole 20 next in the second step operation of control valve 4.

The gas reaching the piston head is mixed by air and diffused. Because the passage sectional area is largely formed at the centre of the cylinder by main connection passage 20, and sub-connection passage 30 inclines towards the surrounding of cylinder 18 from valve seat 24 and is formed having a small passage sectional area, a small amount of spouting is done from sub-connection passage 30 with the valve lift in the first step of control valve 4 and a large amount of combustion flame spouts from main connection passage 1 by the valve lift in the second step.

Therefore, the burning becomes rich mixture combustion in pre-chamber 2 and the burning becomes thin combustion in main chamber 1. Because pressure is applied to the control valve 4 by the compressed induction air of main chamber 1 of this gas engine during the compression stroke by virtue of the piston 15 rising, the compressed air overcomes the pressure in pre-chamber 2 by the pressure of main chamber 1 and pushes the control valve 4 up, the driving force of control valve 4 need not be large.

When the control valve 4 is pushed up once, this state is maintained until the connection passage is opened, the control valve is maintained with the electromagnet as opening, and combustion ends. When control valve 4 returns to former position by return spring 13, first of all main connection passage 20 closes, control valve 4 descends next by gravity, and sub-connection passage 30 is closed with the end of combustion.

Sub-connection passage 30 and main connection passage 20 are closed so that the gas fuel should not flow out from pre-chamber 2 to main chamber 1 through sub-connection passage 30 and main connection passage 20 when the fuel is supplied to pre-chamber 2.

The mixture is promoted and the combustion will be concluded in main chamber 1 in a short term at the expansion stroke.

Load sensor 34 which detects the engine load is installed in this gas engine and the detection signal of this sensor 34 is input to controller 33. The engine load can be detected by measuring the amount of the fuel supply. Controller 33 controls the fuel supply valve 5 and responds to the engine load of the partial load and the full load and to control the open valve period. The amount of the gas fuel supply to pre-chamber 2 can be controlled by shortening the open period of fuel supply valve 5 at a partial load of the engine and lengthening the open period of the engine of fuel supply valve 5 at full loads.

Because this engine supplies the fuel from the pre-chamber to main combustion chamber at the end of the compression step, the oxides of nitrogen are not generated in this engine.

As an alternative, there is provided an engine with pre-chamber further comprising a spark plug in a pre-chamber. This embodiment can be easily ignited compared to the above mentioned embodiment.

According to this gas engine, it is possible to compose the premixture type engine and it is possible to have a high compression ratio of 20 or more. Moreover, control valve 4 opens main connection passage 20 and sub-connection passage 30, the induction air of the high compression ratio flows from main chamber 1 to pre-chamber 2, the fuel gas and the induction air mix, and ignites, and burns at high speed in the state of a rich fuel with large compression ratio, and the generation of NOₓ is controlled.

In addition, the flame is spouted to the part around cylinder 18. Next, the main flame spouts from the centre of the cylinder 18, and the air and the combustion flame mix in main chamber 1 uniformly, giving extremely ideal combustion.

## Claims

1. An engine, the engine comprising:
a main chamber (1) and a pre-chamber (2);
a passage hole (20) installed between the pre-chamber (2) and the main chamber (1)
a control valve (4) for closing the passage hole (20);
a driver (25) for the control valve (4);
an injection nozzle for injecting a fuel to the pre-chamber (2);
means (33) for controlling the control valve (4) to close during an exhaust step and an intake step and to open at the last stage of a compression step; and,
means for controlling the injection nozzle to inject a fuel to the pre-chamber (2) when the control valve (4) is closed; characterised in that:
the means (33) for controlling the control valve controls the control valve opening based on signals from a load sensor; and
the driver is a solenoid.

2. An engine according to claim 1, and further comprising:
a connection passage (30) between the pre-chamber (2) and the main chamber (1); and
wherein the control means (33) controls the control valve (4) to open the connection passage (30) at a first opening step and to open the passage hole (20) and the connection passage (30) at a second opening step.

3. An engine according to claim 2, further comprising an ignition plug installed in the pre-chamber (2).

4. An engine according to claim 1, 2 or 3, wherein the engine is a methanol-fuelled engine.

5. An engine according to claim 1, 2 or 3, wherein the engine is a natural gas-fuelled engine.

6. An engine according to any of claims 1 to 5, wherein the pre-chamber is constructed from ceramics materials having thermal stability.

## Patentansprüche

1. Motor, welcher folgendes umfaßt:
eine Hauptkammer (1) und eine Vorkammer (2);
eine Durchlaßöffnung (20), die zwischen der Vorkammer (2) und der Hauptkammer (1) angeordnet ist;
ein Steuerventil (4) zum Schließen der Durchlaßöffnung (20);
eine Antriebseinrichtung (25) für das Steuerventil (4);
eine Einspritzdüse zum Einspritzen eines Brennstoffes in die Vorkammer (2);
Mittel (33) zum Steuern des Steuerventils (4) für das Schließen während eines Auslaßschrittes und eines Einlaßschrittes und für das Öffnen in der letzten Phase eines Kompressionsschrittes; und
Mittel zum Steuern der Einspritzdüse für das Einspritzen eines Brennstoffes in die Vorkammer (2), wenn das Steuerventil (4) geschlossen ist; dadurch gekennzeichnet, daß
das Mittel (33) zum Steuern des Steuerventils das Öffnen des Steuerventils auf der Basis von Signalen von einem Lastsensor steuert; und
die Antriebseinrichtung ein Elektromagnet ist.

2. Motor nach Anspruch 1, der ferner folgendes umfaßt:
eine Verbindungspassage (30) zwischen der Vorkammer (2) und der Hauptkammer (1);
wobei das Steuermittel (33) das Steuerventil (4) zum Öffnen der Verbindungspassage (30) in einem ersten Öffnungsschritt und zum Öffnen der Durchlaßöffnung (20) und des Verbindungskanals (30) in einem zweiten Öffnungsschritt steuert.

3. Motor nach Anspruch 2, welcher ferner eine in die Vorkammer (2) eingesetzte Zündkerze umfaßt.

4. Motor nach Anspruch 1, 2 oder 3, wobei der Motor ein mit Methanol betriebener Motor ist.

5. Motor nach Anspruch 1, 2 oder 3, wobei der Motor ein mit Erdgas betriebener Motor ist.

6. Motor nach einem der Ansprüche 1 bis 5, wobei die Vorkammer aus keramischen Materialien mit Wärmebeständigkeit aufgebaut ist.

## Revendications

1. Moteur, le moteur comportant :
une chambre principale (1) et une préchambre (2);
un trou de passage (20) installé entre la préchambre (2) et la chambre principale (1),
une soupape de commande (4) destinée à fermer le trou de passage (20);
un élément d'entraînement (25) pour la soupape de commande (4);
un injecteur destiné à injecter du carburant dans la préchambre (2);
des moyens (33) destinés à commander la soupape de commande (4) afin de se fermer pendant une étape d'échappement et une étape d'admission et afin de s'ouvrir lors du dernier stade d'une étape de compression; et
des moyens destinés à commander l'injecteur afin d'injecter du carburant dans la préchambre (2) lorsque la soupape de commande (4) est fermée; caractérisé en ce que :
les moyens (33) destinés à commander la soupape de commande commandent l'ouverture de soupape de commande sur la base de signaux provenant d'un capteur de charge; et
l'élément d'entraînement est un électro-aimant.

2. Moteur selon la revendication 1, comportant en outre :
un passage de raccordement (30) entre la préchambre (2) et la chambre principale (1); et
dans lequel les circuits de commande (33) commandent la soupape de commande (4) afin d'ouvrir le passage de raccordement (30) dans une première étape d'ouverture et afin d'ouvrir le trou de passage (20) et le passage de raccordement (30) dans une deuxième étape d'ouverture.

3. Moteur selon la revendication 2, comportant en outre une bougie d'allumage installée dans la préchambre (2).

4. Moteur selon la revendication 1, 2 ou 3, dans lequel le moteur est un moteur à carburant au méthanol.

5. Moteur selon la revendication 1, 2 ou 3, dans lequel le moteur est un moteur à carburant au gaz naturel.

6. Moteur selon l'une quelconque des revendications 1 à 5, dans lequel la préchambre est construite en matière céramique ayant une stabilité thermique.
